# FASCICULE DE BREVET EUROPEEN

(11) **EP 4 029 077 B1**
(45) Date de publication et mention de la délivrance du brevet: **28.06.2023**
(21) Numéro de dépôt: 20785548.7
(22) Date de dépôt: 08.09.2020
(51) Int. Cl.: H01M 10/613, H01M 10/625, H01M 10/654, H01M 10/6567

(54) **DISPOSITIF DE RÉGULATION DE TEMPÉRATURE D'UN ÉLÉMENT ÉLECTRIQUE À L'AIDE D'UN FLUIDE DIÉLECTRIQUE**
VORRICHTUNG ZUR REGELUNG DER TEMPERATUR EINES ELEKTRISCHEN ELEMENTES MITTELS EINER DIELEKTRISCHEN FLÜSSIGKEIT
DEVICE FOR REGULATING THE TEMPERATURE OF AN ELECTRICAL ELEMENT BY MEANS OF A DIELECTRIC FLUID

(30) Priorité: 10.09.2019 FR 1909980
(43) Date de publication de la demande: 20.07.2022
(73) Titulaire: VALEO SYSTEMES THERMIQUES, 78320 Le Mesnil Saint-Denis (FR)
(72) Inventeur: AZZOUZ, Kamel, 78322 LE MESNIL SAINT DENIS CEDEX (FR); GARNIER, Sébastien, 78322 LE MESNIL SAINT DENIS CEDEX (FR); MAMMERI, Amrid, 78322 LE MESNIL SAINT DENIS CEDEX (FR)
(74) Mandataire: Valeo Systèmes Thermiques
(86) Numéro de dépôt international: PCT/FR2020/051544
(87) Numéro de publication internationale: WO 2021/048492

(56) Documents cités:
- EP-A1- 3 166 175
- WO-A1-2018/230349
- WO-A1-2019/115972
- DE-A1-102017 212 211

## Description

L'invention concerne un dispositif de régulation de température d'une batterie électrique ou autre élément électrique à refroidir et/ou chauffer à l'aide d'un fluide diélectrique et la batterie électrique comprenant ledit dispositif. Elle est en particulier destinée à équiper des véhicules automobiles, en particulier des véhicules automobiles à motorisation électrique ou hybride. En particulier, la présente invention se rapporte à un dispositif conforme au préambule de la revendication 1, et tel que décrit dans le document DE 10 2017 212211.

La part de marché des véhicules électriques étant de plus en plus importante, les problématiques de refroidissement/chauffage des packs batterie qui les équipent deviennent des enjeux stratégiques. L'objectif est de concevoir un dispositif de gestion thermique des batteries le plus performant, efficient et économique possible. Souvent pour répondre au besoin de refroidissement/chauffage des batteries électriques, on utilise des « échangeurs de chaleur» consistant en une plaque froide avec circulation d'un liquide de refroidissement, les plaques étant au contact des cellules à refroidir. Ce genre de technique peut conduire à un refroidissement non homogène des batteries et limiter ainsi leur durée de vie et leur performance. Ces dispositifs présentent en outre une résistance thermique relativement élevée en raison des épaisseurs de matière présentes entre le liquide de refroidissement et les cellules. Une solution proposée pour répondre à cette problématique consiste en une immersion des cellules formant les batteries électriques dans un fluide caloporteur diélectrique. Cette immersion peut être réalisée avec une circulation de fluide ou en condition statique avec changement de phase.

Ces deux techniques sont performantes d'un point de vue thermique en particulier en raison du contact direct établi entre le liquide et les cellules mais présentent le désavantage d'utiliser une grande quantité de liquide diélectrique, ce qui augmente le coût et le poids du pack batterie.

Pour pallier cet inconvénient, il est connu des circuits de fluide diélectrique permettant d'asperger les cellules avec du fluide diélectrique. Cependant, une inclinaison du véhicule peut empêcher un acheminement correct du fluide diélectrique vers la pompe de fluide diélectrique.

L'invention vise à résoudre ces problèmes en proposant un dispositif de régulation de température d'un élément électrique susceptible de chauffer, ledit dispositif comprenant un circuit de fluide diélectrique, ledit circuit comprenant des moyens d'aspersion pour asperger la surface dudit élément à l'aide dudit fluide diélectrique, un réservoir de fluide diélectrique, caractérisé en ce que le réservoir comprend un volume principal, ledit volume principal étant destiné à contenir ledit élément électrique susceptible de chauffer, et un volume annexe de stockage de fluide diélectrique, ledit volume annexe étant relié fluidiquement auxdits moyens d'aspersion, ledit volume annexe étant au moins partiellement périphérique par rapport au volume principal.

Le dispositif peut également comprendre l'une quelconque des caractéristiques suivantes, prise(s) individuellement ou selon toute combinaison techniquement possible:
- ledit volume annexe est au moins partiellement autour du volume principal ;
- ledit volume annexe comprend un orifice de sortie de fluide diélectrique relié fluidiquement à ladite pompe ;
- ledit volume annexe est configuré de telle sorte que, dans toute position inclinée du dispositif de 15° par rapport à l'horizontale, un orifice de sortie de fluide diélectrique du volume annexe est immergé si le volume annexe est rempli de fluide diélectrique ;
- le volume principal (12) est délimité par une première enceinte ;
- le volume annexe (14) est délimité par une deuxième enceinte, distincte de la première enceinte ;
- la deuxième enceinte est au moins partiellement autour de la première enceinte ;
- la première enceinte est formée par une première paroi périphérique et la deuxième enceinte est formée par une deuxième paroi s'étendant au moins en partie autour de la première paroi ;
- la première paroi et la deuxième paroi délimitent ensemble ledit volume annexe ;
- le dispositif comprend une pompe pour pomper le fluide diélectrique du volume annexe vers lesdits moyens d'aspersion.
- ledit dispositif comprend au moins une électrovanne pour ouvrir / fermer la connexion fluidique entre ledit volume annexe et ladite pompe ;
- ledit dispositif comprend une pompe de relevage pour amener le fluide diélectrique dudit volume principal vers ledit volume annexe ;
- les moyens d'aspersion comprennent des buses d'aspersion ;
- les buses d'aspersion sont définis par des orifices d'aspersion ;
- ledit élément électrique est une cellule de stockage d'énergie ;
- lesdites cellules comprennent un corps, les connectiques de liaison électriques étant situées au niveau d'une face supérieure du corps ;
- ladite batterie comprend une plaque de condensation, située en regard de ladite face supérieure des cellules ;
- le dispositif comprend des moyens de régulation de la température de la plaque de condensation ;
- la plaque de condensation définit un circuit de passage d'un liquide caloporteur dans la plaque de condensation.

Un objet de l'invention est également une batterie électrique comprenant un corps fermé étanche, ledit corps comprenant ledit élément électrique susceptible de chauffer et un dispositif tel que décrit ci-dessus pour réguler la température dudit élément électrique.

La batterie peut également comprendre l'une quelconque des caractéristiques suivantes, prise(s) individuellement ou selon toute combinaison techniquement possible:
- la batterie comprend plusieurs modules comprenant chacun plusieurs cellules de stockage d'énergie ;
- la batterie comprend un dispositif de régulation thermique par module, en particulier une pompe par module ;
- la batterie comprend un dispositif commun et une pompe commune pour plusieurs modules, par exemple pour l'ensemble des modules, chaque module comprenant chacun un réservoir de fluide diélectrique tel que décrit ci-dessus.

Un objet de l'invention est également un système électrique comprenant ladite batterie, des moyens de mesure d'inclinaison dudit dispositif, et un contrôleur.

Le système électrique peut également comprendre l'une quelconque des caractéristiques suivantes, prise(s) individuellement ou selon toute combinaison techniquement possible:
- le dispositif comprend une électrovanne pour ouvrir / fermer la connexion fluidique entre ledit volume annexe et ladite pompe et un contrôleur pour commander l'électrovanne en fonction d'une mesure d'inclinaison ;
- le dispositif comprend une pompe supplémentaire présentant les mêmes caractéristiques que ladite pompe pour pomper le fluide diélectrique vers les moyens d'aspersion, les deux pompes étant munis de clapets anti-retour ;
- le contrôleur commande l'une ou l'autre des pompes en fonction d'une mesure d'inclinaison.

L'invention sera mieux comprise et d'autres détails, caractéristiques et avantages de l'invention apparaîtront à la lecture de la description suivante faite à titre d'exemple non limitatif et en référence aux dessins annexés dans lesquels :
[Fig.1] la figure 1 illustre en perspective un dispositif de régulation thermique d'une batterie selon un mode de réalisation de l'invention, en position horizontale ;
[Fig.2] la figure 2 partielle et agrandie de la figure 1 ;

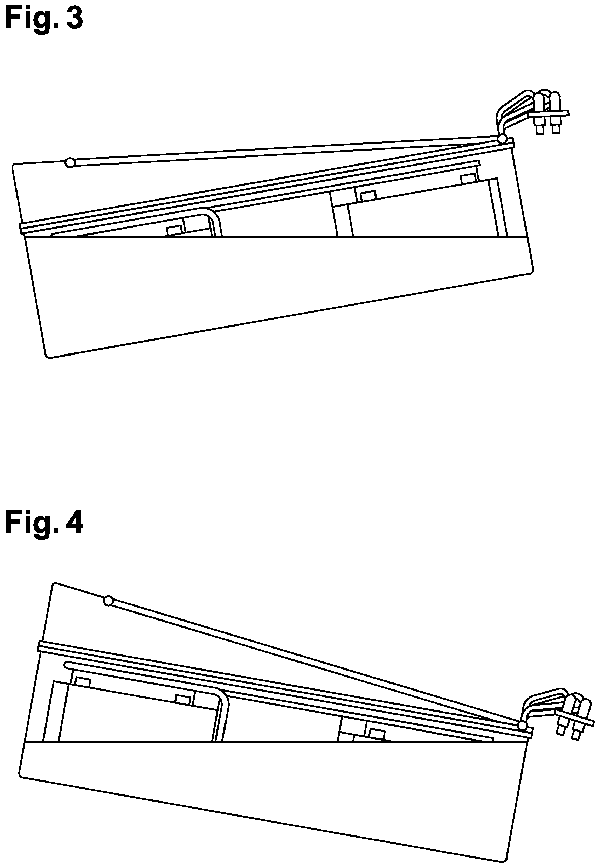

[Fig.3] la figure 3 est une vue schématique en coupe de la figure 1, en position inclinée ;
[Fig.4] la figure 4 est une vue analogue à la figure 3, avec une inclinaison opposée.

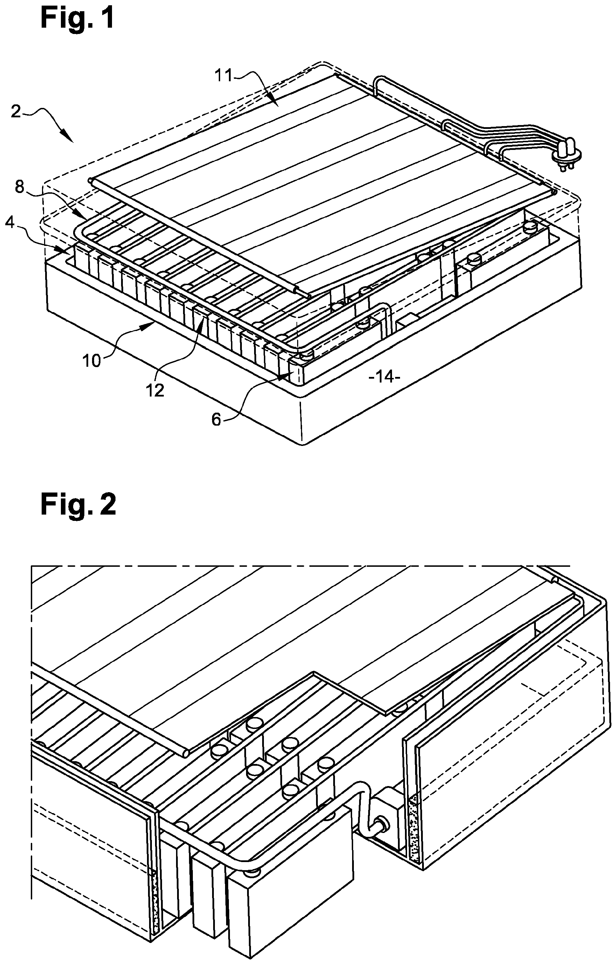

La figure 1 illustre un dispositif 2 de régulation de température d'une batterie 4 comprenant plusieurs cellule 6 de stockage d'énergie. En variante, il s'agit cependant de tout autre élément électrique à refroidir.

Le dispositif comprend un circuit de fluide diélectrique pour refroidir ou réchauffer les cellules 6.

Le circuit comprend des moyens d'aspersion 8 pour asperger la surface des cellules 6 à l'aide dudit fluide diélectrique, un réservoir 10 de fluide diélectrique et une pompe (non représentée) pour pomper le fluide diélectrique vers lesdits moyens d'aspersion 8.

L'aspersion en fluide diélectrique se fait en phase liquide ou diphasique. L'évaporation du diélectrique à la surface des cellules refroidi les cellules et évapore le fluide diélectrique. Pour économiser du fluide diélectrique, le volume du réservoir en fluide diélectrique est d'au plus 20% du volume du réservoir, de préférence d'au plus 10%. Le fluide diélectrique est refroidi et ainsi condensé par un condenseur 11 sous la forme d'une plaque disposée au-dessus des cellules 6. La plaque délimite en son sein un circuit de réfrigérant et relié par des tubulures à un circuit externe de réfrigérant mais elle est en variante de tout type adapté pour refroidir le fluide diélectrique et ainsi le condenser pour sa récupération dans le réservoir 10.

Le réservoir 10 comprend un volume principal 12 destiné à contenir les cellules 6 de stockage d'énergie, et un volume annexe 14 de stockage de fluide diélectrique.

Le volume principal 12 est délimité par une première enceinte, formée par une première paroi périphérique.

Le volume annexe 14 est délimité par une deuxième enceinte, autour de la première enceinte, entre la première paroi et une deuxième paroi s'étendant autour de la première paroi.

Le volume annexe s'étend ainsi de façon périphérique autour du volume principal.

Le volume annexe s'étend dans sa hauteur sur toute la hauteur du volume principal au moins. Il est ainsi à un même niveau horizontal, au moins en partie.

Le volume annexe a en revanche une dimension très inférieure à celle du volume principal, à savoir sa largeur, ici mesurée entre la première paroi et la deuxième paroi, et comparée à la largeur du volume principal entre deux côtés opposés de la première paroi.

D'une manière générale, le volume annexe a une dimension dans un plan horizontal, inférieure à une même dimension du volume principal.

Grâce à ses dimensions réduites, même en cas d'inclinaison du véhicule, le volume annexes garde en leur sein une quantité suffisante de fluide diélectrique pour alimenter la pompe un certain temps.

Par ailleurs, sa disposition périphérique, garantit qu'au moins une partie du volume annexe alimenter en fluide diélectrique en cas d'inclinaison constante par exemple. Les orifices des volumes annexes sont par exemple pourvus de clapet anti retour pour éviter que les conduits alimentant la pompe ne se vident par l'effet de l'inclinaison du dispositif. La pompe reste alimentée en permanence, même sur une longue période d'inclinaison.

Pour ce faire, d'une manière générale, au moins une dimension annexe d'un volume annexe est au plus égale à un 1/2 de la même dimension du volume principal, de préférence au plus égale à 1/3.

Les volumes annexes sont ainsi configurés de telle sorte que, dans toute position inclinée du dispositif de 15° par rapport à l'horizontale, l'orifice de sortie de fluide diélectrique est immergé.

Le volume annexe 14 a ici une forme parallélépipédique mais elle est en variante de tout type adapté.

La pompe est par exemple reliée directement au volume 14, sans conduits intermédiaires. La pompe présente à cet effet un orifice d'entrée en contact avec un orifice de sortie du volume annexe, mais cette connexion fluidique entre les deux est en variante de tout type adapté.

En variante, une pompe de relevage est reliée à un point bas du volume principal 12. Cette variante permet ainsi de récupérer le fluide diélectrique dans cette autre partie du volume principal et achemine le fluide diélectrique vers le volume annexe 14.

Dans tous les modes de réalisation, des électrovannes sont par exemple prévues, couplées à un moyen de détection de l'inclinaison. Il est ainsi possible de fermer les conduits non alimentés.

Dans tous les modes de réalisation également, la batterie peut comprendre plusieurs modules comprenant chacun plusieurs cellules de stockage d'énergie.

Deux solutions sont envisagées :
- la batterie comprend un dispositif de régulation thermique par module, en particulier une pompe par module ;
- la batterie comprend un dispositif commun et une pompe commune pour plusieurs modules, par exemple pour l'ensemble des modules, chaque module comprenant chacun un réservoir de fluide diélectrique tel que décrit ci-dessus.

## Revendications

1. Dispositif (2) de régulation de température d'un élément électrique susceptible de chauffer, ledit dispositif (2) comprenant un circuit de fluide diélectrique, ledit circuit comprenant des moyens d'aspersion (8) pour asperger la surface dudit élément à l'aide dudit fluide diélectrique, un réservoir (10) de fluide diélectrique, le réservoir comprenant un volume principal (12), ledit volume principal étant destiné à contenir ledit élément électrique susceptible de chauffer, le dispositif étant **caractérisé en ce que** le réservoir comprend, en outre, un volume annexe (14) de stockage de fluide diélectrique, ledit volume annexe étant relié fluidiquement audits moyens d'aspersion, ledit volume annexe étant au moins partiellement périphérique par rapport au volume principal.

2. Dispositif (2) selon la revendication 1, dans lequel ledit volume annexe est au moins partiellement autour du volume principal.

3. Dispositif (2) selon la revendication 1 ou 2, dans lequel ledit volume annexe est configuré de telle sorte que, dans toute position inclinée du dispositif de 15° par rapport à l'horizontale, un orifice de sortie de fluide diélectrique du volume annexe est immergé si le volume annexe est rempli de fluide diélectrique.

4. Dispositif (2) selon l'une quelconque des revendications précédentes, dans lequel le volume principal (12) est délimité par une première enceinte.

5. Dispositif (2) selon l'une quelconque des revendications précédentes, dans lequel le volume annexe (14) est délimité par une deuxième enceinte, distincte de la première enceinte.

6. Dispositif (2) selon la revendication précédente, dans lequel la deuxième enceinte est au moins partiellement autour de la première enceinte.

7. Dispositif (2) selon la revendication précédente, dans lequel la première enceinte est formée par une première paroi périphérique et la deuxième enceinte est formée par une deuxième paroi s'étendant au moins en partie autour de la première paroi.

8. Dispositif (2) selon la revendication précédente, dans lequel la première paroi et la deuxième paroi délimitent ensemble ledit volume annexe.

9. Dispositif (2) selon l'une quelconque des revendications précédentes, comprenant une pompe (11) pour pomper le fluide diélectrique du volume annexe vers lesdits moyens d'aspersion.

10. Batterie électrique comprenant un corps fermé étanche, ledit corps comprenant ledit élément électrique susceptible de chauffer (6) et un dispositif (2) selon l'une quelconque des revendications précédentes pour réguler la température dudit élément électrique.

11. Système électrique comprenant une batterie telle que définie en revendication 10, des moyens de mesure d'inclinaison dudit dispositif, et un contrôleur.

## Patentansprüche

1. Vorrichtung (2) zur Regelung der Temperatur eines elektrischen Elements, das warm werden kann, wobei die Vorrichtung (2) Folgendes beinhaltet: einen Kreislauf einer dielektrischen Flüssigkeit, wobei der Kreislauf Sprühmittel (8) beinhaltet, um die Oberfläche des Elements mit Hilfe der dielektrischen Flüssigkeit zu besprühen, einen Behälter (10) mit dielektrischer Flüssigkeit, wobei der Behälter ein Hauptvolumen (12) beinhaltet, wobei das Hauptvolumen dazu bestimmt ist, das elektrische Element, das warm werden kann, aufzunehmen, wobei die Vorrichtung **dadurch gekennzeichnet ist, dass** der Behälter ferner ein Nebenvolumen (14) zum Speichern dielektrischer Flüssigkeit beinhaltet, wobei das Nebenvolumen mit den Sprühmitteln fluidisch verbunden ist, wobei das Nebenvolumen zu dem Hauptvolumen mindestens teilweise peripher angeordnet ist.

2. Vorrichtung (2) nach Anspruch 1, wobei das Nebenvolumen das Hauptvolumen mindestens teilweise umgibt.

3. Vorrichtung (2) nach Anspruch 1 oder 2, wobei das Nebenvolumen so konfiguriert ist, dass eine Flüssigkeitsauslassöffnung für dielektrische Flüssigkeit des Nebenvolumens in jeder zu der Horizontalen um 15° geneigten Position der Vorrichtung eingetaucht ist, wenn das Nebenvolumen mit dielektrischer Flüssigkeit gefüllt ist.

4. Vorrichtung (2) nach einem beliebigen der vorhergehenden Ansprüche, wobei das Hauptvolumen (12) durch eine erste Einfassung begrenzt wird.

5. Vorrichtung (2) nach einem beliebigen der vorhergehenden Ansprüche, wobei das Nebenvolumen (14) durch eine zweite Einfassung, die sich von der ersten Einfassung unterscheidet, begrenzt wird.

6. Vorrichtung (2) nach dem vorhergehenden Anspruch, wobei die zweite Einfassung die erste Einfassung mindestens teilweise umgibt.

7. Vorrichtung (2) nach dem vorhergehenden Anspruch, wobei die erste Einfassung durch eine erste Umfangswand gebildet ist und die zweite Einfassung durch eine zweite Wand gebildet ist, die sich mindestens teilweise um die erste Wand herum erstreckt.

8. Vorrichtung (2) nach dem vorhergehenden Anspruch, wobei die erste Wand und die zweite Wand zusammen das Nebenvolumen begrenzen.

9. Vorrichtung (2) nach einem beliebigen der vorhergehenden Ansprüche, die eine Pumpe (11) zum Pumpen der dielektrischen Flüssigkeit von dem Nebenvolumen zu den Sprühmitteln beinhaltet.

10. Elektrische Batterie, die einen dichten geschlossenen Körper beinhaltet, wobei der Körper das elektrische Element (6), das warm werden kann, und eine Vorrichtung (2) nach einem beliebigen der vorhergehenden Ansprüche zur Regelung der Temperatur des elektrischen Elements beinhaltet.

11. Elektrisches System, das eine Batterie wie in Anspruch 10 definiert, Mittel zum Messen der Neigung der Vorrichtung und eine Steuerung beinhaltet.

## Claims

1. Device (2) for regulating the temperature of an electric element that is able to heat up, the said device (2) comprising a dielectric-fluid circuit, the said circuit comprising sprinkling means (8) for sprinkling the surface of the said element using the said dielectric fluid, and a dielectric-fluid reservoir (10), the reservoir comprising a main volume (12), the said main volume being intended for containing the said electric element that is able to heat up, the device being **characterized in that** the reservoir moreover comprises an ancillary volume (14) for storing dielectric fluid, the said ancillary volume being fluidically connected to the said sprinkling means, the said ancillary volume being at least partially peripheral with respect to the main volume.

2. Device (2) according to Claim 1, wherein the said ancillary volume is at least partially around the main volume.

3. Device (2) according to Claim 1 or 2, wherein the said ancillary volume is configured such that, in any position in which the device is inclined by 15° with respect to the horizontal, a dielectric-fluid outlet orifice of the ancillary volume is immersed if the ancillary volume is filled with dielectric fluid.

4. Device (2) according to any one of the preceding claims, wherein the main volume (12) is delimited by a first enclosure.

5. Device (2) according to any one of the preceding claims, wherein the ancillary volume (14) is delimited by a second enclosure, which is separate from the first enclosure.

6. Device (2) according to the preceding claim, wherein the second enclosure is at least partially around the first enclosure.

7. Device (2) according to the preceding claim, wherein the first enclosure is formed by a first peripheral wall and the second enclosure is formed by a second wall extending at least in part around the first wall.

8. Device (2) according to the preceding claim, wherein the first wall and the second wall together delimit the said ancillary volume.

9. Device (2) according to any one of the preceding claims, comprising a pump (11) for pumping the dielectric fluid from the ancillary volume towards the said sprinkling means.

10. Electric battery comprising a sealed closed body, the said body comprising the said electric element (6) that is able to heat up and a device (2) according to any one of the preceding claims for regulating the temperature of the said electric element.

11. Electrical system comprising a battery as defined in Claim 10, means for measuring the inclination of the said device, and a controller.
